**Europäisches Patentamt**

**European Patent Office**

**Office européen des brevets**

(19)

(11) Numéro de publication: **0 175 619**
**B1**

(12)

# FASCICULE DE BREVET EUROPEEN

(45) Date de publication du fascicule du brevet: **27.06.90**

(51) Int. Cl.⁵: **H 01 J 9/44,** H 04 N 17/04

(21) Numéro de dépôt: **85401798.5**

(22) Date de dépôt: **17.09.85**

(54) **Procédé de réglage d'un déviateur pour tube de télévision à trois canons en ligne, et appareil mettant en oeuvre le procédé.**

(30) Priorité: **21.09.84 FR 8414569**

(43) Date de publication de la demande:
**26.03.86 Bulletin 86/13**

(45) Mention de la délivrance du brevet:
**27.06.90 Bulletin 90/26**

(84) Etats contractants désignés:
**DE FR GB IT NL**

(56) Documents cités:
**EP-A-0 021 275**
**FR-A-2 506 105**
**US-A-4 163 308**
**US-A-4 360 839**

(73) Titulaire: **VIDEOCOLOR**
**7, boulevard Romain-Rolland**
**F-92128 Montrouge (FR)**

(72) Inventeur: **Fringant, Jean-Claude**
**THOMSON-CSF SCPI 173, bld Haussmann**
**F-75379 Paris Cedex 08 (FR)**
Inventeur: **Pieri, Roger**
**THOMSON-CSF SCPI 173, bld Haussmann**
**F-75379 Paris Cedex 08 (FR)**

(74) Mandataire: **Grynwald, Albert et al**
**THOMSON-CSF SCPI**
**F-92045 PARIS LA DEFENSE CEDEX 67 (FR)**

Courier Press, Leamington Spa, England.

**Description**

La présente invention concerne un procédé de réglage d'un déviateur pour tube de télévision à trois canons en ligne. Elle concerne aussi un appareil mettant en oeuvre le procédé. Un tel procédé et un appareil mettant en oeuvre cet procédé on connaît déja (FR—A—2.506.105). Elle trouver application dans le domaine de la fabrication en grande série de déviateurs, et dans celui dans montage des déviateurs sur les tubes de télévision grand public.

Selon des procédés de l'art antérieur qui fait partie des connaissances pratiques acquises par les inventeurs, on sait fabriquer des déviateurs magnétiques comportant un bobinage de ligne et un bobinage de trame réalisant un balayage de génération d'une image en couleur de qualité. Ces déviateurs réalisent, en modelant les lignes de champs magnétiques, l'autoconvergence et diverses corrections d'images réalisées autrefois par des circuits d'aide. Mais il faut réaliser un réglage très précis du déviateur. En effet celui-ci comporte sur un séparateur conique une ferrite portant un bobinage toroïdal de balayage de trame. A l'intérieur du séparateur est fixé un bobinage en forme de selle pour le balayage de ligne. La ferrite est montée mobile sur le séparateur. Le déviateur ne fontionne que si:

— les deux bobinages sont bien situés l'un par rapport à l'autre;

— le déviateur lui-même est bien situé sur le col du tube sur lequel il est monté.

Le réglage du déviateur est réalisé classiquement en deux opérations. La première opération est effectuée à la fin de la fabrication du déviateur et celui-ci est alors collé de manière à fixer ce réglage. La seconde opération est réalisée au montage du tube lors de l'assemblage des divers composants.

L'inconvénient majeur de ce procédé est d'obliger à utiliser un tube d'essai pour la première opération pour afficher une mire de contrôle. Pour cela, on prélève par des méthodes statistiques d'échantillonnage, une série de tubes d'essais destinée à la première opération. Chaque tube d'essai présente des caractéristiques moyennes qui permettent de réaliser un réglage de déviateur selon la première opération, transportable sur un autre tube. Il va de soi que la sélection de la série d'essais est délicate. Chaque déviateur est amené, après fabrication, à un poste de réglage selon la première opération. Un opérateur place le déviateur sur le col d'un tube d'essai monté dans une cabine obscure, relie les connexions des bobinages du déviateur à un générateur de mire. Par affichage de mires on peut mesurer quatre défauts de convergences dits d'amplitudes verticale et horizontale et de croisements vertical et horizontal. Selon la première opération, il cherche à réduire ces quatre défauts de mire. Les inconvénients sont multiples. On peut citer:

— le problème de la sélection d'un tube d'essai;

— le recours à un opérateur pour apprécier visuellement un défaut dimensionnel sur une image;

— la lenteur dûe au caractère manuel des manipulations;

— l'obligation d'entretenir un ensemble important de postes, tous semblables en caractéristiques, pour le réglage des déviateurs construits en grande série;

— le coût unitaire élevé de chaque poste.

C'est un objet de la présente invention d'éviter d'avoir à sélectionner un tube de télévision selon des procédures compliquées qui, de fait, introduisent une erreur répartie aléatoirement sur toute une fabrication.

C'est un autre objet de l'invention de permettre de ne pas recourir à l'évaluation visuelle d'une mire, de telles évaluations variant selon les sujets.

C'est un autre objet de l'invention de limiter et même d'éliminer les interventions manuelles dans la première opération de réglage. On atteint ainsi des cadences élevées de réglage, le gain de temps atteignant largement cinq fois.

C'est un autre objet de l'invention de proposer un procédé et un appareil dont les couts qu'ils entraînment sont largement réduits relativement à l'art antérieur rappelé ci-dessus.

Après le réglage selon la première opération, le déviateur réglé est collé, c'est-à-dire que la ferrite qui porte la trame est immobilisée sur son séparateur et devient donc fixé relativement à la ligne. Le déviateur en tant que composant, sous réserve d'opérations annexes, est alors un produit fini qui est expédié au fabricant de tubes de télévision. Celui-ci doit alors effectuer la seconde opération: adapter le déviateur au tube de télévision auquel il est destiné. Chaque tube arrive donc à un poste semblable à celui décrit précédemment, est pris en charge par un opérateur qui reçoit aussi un déviateur, monte le déviateur sur le col du tube et y affiche une mire semblable à celle de la première opération. L'opérateur doit alors minimiser à nouveau les quatre défauts de mire précités en déplaçant axialement le déviateur selon l'axe de balayage ligne ou l'axe de balayage trame. Pour cela, le déviateur est fixé par l'arrière et des bras permettant le déplacement de l'avant du déviateur selon les deux axe précités sont manipulés par l'opérateur.

Les inconvénients inhérents à cette seconde opération sont notamment:

— que le tube destiné à un déviateur donné peut avoir des caractéristiques assez éloignées, dans la mesure de la classe statistique de la sélection du tube d'essai de la première opération, de celle de ce tube;

— le fait que le réglage des quatre défauts ne peut se faire qu'avec deux paramètres indépendants: les déplacements du déviateur le long de la direction de balayage de ligne et le long de la direction de balayage de trame, l'opérateur étant contraint à réaliser un équilibrage des quatre défauts non déterminable.

C'est un objet de la présente invention d'éviter les écarts de caractéristiques entre le tube d'essai de première opération et le tube de télévision sur lequel le déviateur sera finalement monté.

C'est un autre objet de la présente invention de permettre de limiter le travail de réglage de l'opérateur en réduisant les variations possibles des quatres défauts en transposant une partie des réglages de la seconde opération lors de la première.

En effet, l'invention concerne un procédé de réglage d'un déviateur pour tube de télévision à trois canons en ligne. Le procédé de l'invention consiste notamment:

1) à disposer le déviateur sur une tête de mesure comportant des capteurs de gradients de champ;

2) à mesurer des gradients des champs de trame et de ligne dans au moins une zone arrière et une zone avant du déviateur;

3) à déplacer autour d'un axe central de la tête de mesure la bobine de trame montée sur une ferrite support de manière à réaliser l'orthogonalité des champs de trame et de ligne;

4) à simuler un alignement du déviateur sur un tube de télévision en mesurant avec la tête de mesure des signaux proportionnels au décalage angulaire entre l'axe de la tête et chaque axe de symétrie moyen des champs ligne et trame;

5) à déplacer la ferrite dans au moins une direction du plan orthogonal à l'axe de la tête de mesure de manière à annuler chacun des signaux proportionnels;

6) à fixer, au moins temporairement, la ferrite relativement au bobinage de ligne.

La présente invention concerne aussi un appareil de réglage de déviateur mettant en oeuvre le procédé de l'invention—voir revendication 6. Un tel appareil comporte selon l'invention des moyens de support et de centrage premièrement du déviateur lui-même, secondement d'une bobine par rapport à l'autre. L'appareil comporte aussi une tête de mesure de gradients de champ dont les données sont fournies à un calculateur qui met en oeuvre les paramètres de l'invention. Enfin, l'appareil selon l'invention comporte aussi deux lignes d'alimentation de simulation de balayage de ligne et de trame et un asservissement des moyens de centrage précités.

D'autres caractéristiques et avantages apparaîtront à l'aide de la description et des figures qui sont:

— la figure 1: une vue de l'arrière d'un tube de télévision équipé d'un déviateur;

— la figure 2: une coupe partielle du téléviseur équipé selon la figure 1;

— la figure 3: un synoptique d'un appareil mettant en oeuvre le procédé de l'invention;

— la figure 4: une première mire utilisée dans le procédé selon l'invention;

— la figure 5: une seconde mire utilisée dans le procédé selon l'invention;

— les figures 6 à 9: des schémas expliquant le fonctionnement de la tête de mesure des gradients de champ;

— la figure 10: un schéma d'un mode de réalisation d'un premier circuit de l'appareil selon l'invention;

— la figure 11: un schéma d'un mode de réalisation d'un second circuit de l'appareil selon l'invention;

— la figure 12: un schéma d'un mode de réalisation d'un troisième circuit de l'appareil selon l'invention.

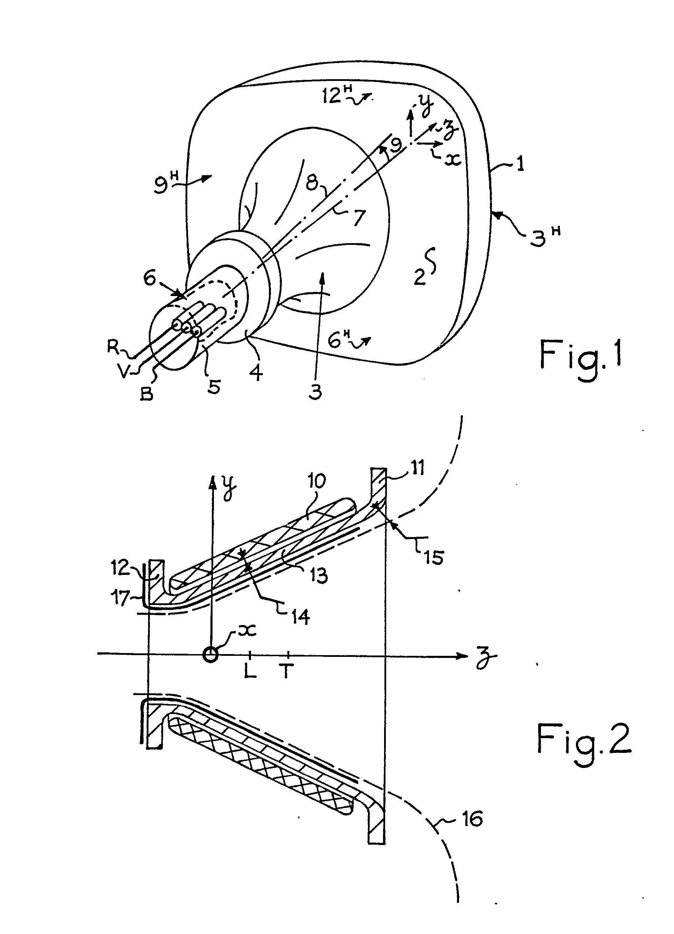

A la figure 1 on a représenté la vue de l'arrière d'un tube de télévision. Le tube de télévision comporte un écran 1 monté sur une partie évasée 2 dont l'extrémité est constituée par un col 5. Le col 5 contient un ensemble 6 constitué de trois canons en ligne chacun attribué aux couleurs successives rouge, vert, bleu. Sur le col du tube est disposé un déviateur 3 dont la forme générale affecte celle d'un collier qui est ajusté au raccordement entre la partie cylindrique du col et la partie évasée 2 de l'arrière de l'écran 1.

Sur cette figure on perçoit le problème soulevé notamment par la deuxième opération de réglage décrite plus haut. En effet, par construction le tube admet un axe central 7 correspondant à l'axe de convergence de l'ensemble de déviation 3. Au montage du déviateur 3 celui-ci est généralement disposé selon un axe magnétique qui lui est propre 8 qui fait avec l'axe 7 un angle repéré 9 qu'il faut aligner. Les méthodes mécaniques étant inopérantes pour ce genre de réglage, il est connu selon l'art antérieur de vérifier les comportements magnétiques du tube, en particulier sa convergence, par les déformations de mire affichées sur l'écran 1. A cet effet, on désigne les quatre points caractéristiques de l'écran par les appellations horaires habituels 12H, 3H, 6H, 9H. A l'axe 9 on attribue aussi un trièdre de référence x, y, z l'axe z étant l'axe général de propagation des faisceaux d'électrons issus des canons en l'absence de déviation l'axe x reproduisant sensiblement la direction de balayage de ligne et l'axe y la direction de balayage de trame.

A la figure 2 on a représenté une coupe partielle d'un tube de télévision à peu près selon celui de la figure 1. Le déviateur est installé sur la verrerie 16 du tube représenté partiellement en traits courts. Il comporte principalement un séparateur 11—13 qui réalisé en matériau plastique supporte une première bobine 10 et une seconde bobine 17. La première bobine 10 est constituée par une bobine solénoïdale ou toroïdale disposée autour d'un noyau en ferrite à peu près de forme cônique. La bobine 17 est constituée par une bobine thermoformée en forme de selle de cheval installée dans un logement du séparateur 11 dans l'espace 15 libre entre celle-ci et la partie évasée du tube. La première bobine 10 est attribuée au balayage de trame et la seconde bobine 17 au balayage de ligne. Un tel déviateur est dit déviateur de type selle-tore. Il apparaît sur la figure qu'on peut, le long de l'axe z, distinguer un centre de déviation de ligne L et une centre de déviation de trame T. Pour minimiser les défauts de géométrie et de convergence il convient que les deux centres de déviation de ligne L et de trame T soient alignés sur cet axe z qui est aussi l'axe 9 du tube. Pour cela dans le genre de déviateur selle-tore, on dispose de deux paramètres de réglage: un déplacement de la bobine 10 selon l'axe x d'autre part selon l'axe y. En effet, on remarque que entre le

EP 0 175 619 B1

tore 10 et le séparateur 11 il existe un écart 14 qui permet des déplacements de l'ordre du millimètre. C'est cette opération de déplacement selon x ou y permet le réglage selon la première opération décrite plus haut.

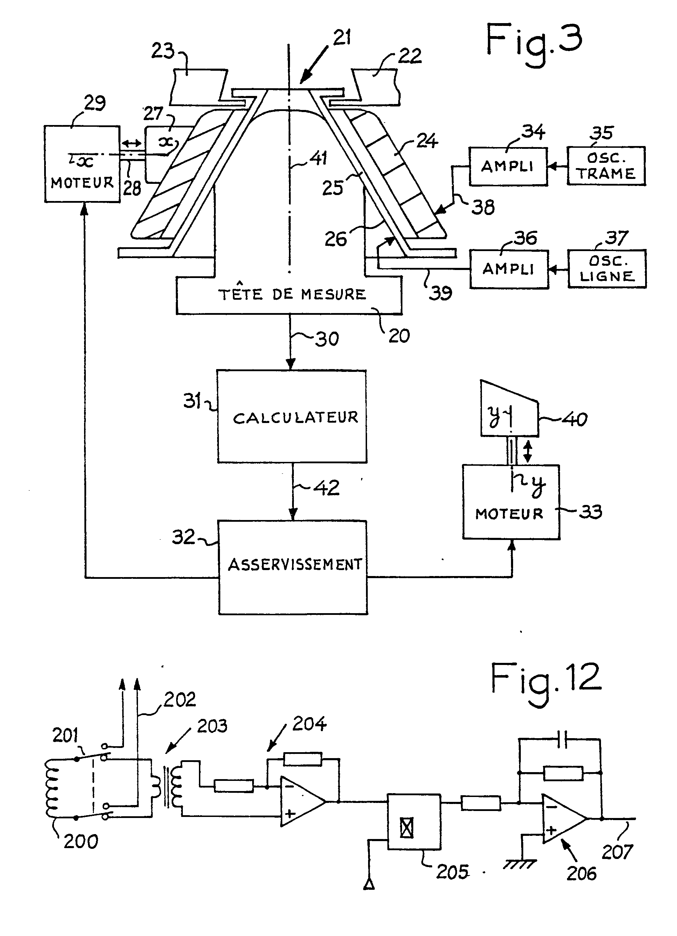

A la figure 3 on a représenté le schéma général d'un appareil mettant en oeuvre l'invention. Un appareil selon l'invention comporte principalement des moyens de centrage 22 et de positionnement en assiette 23 du déviateur 21 par rapport à tête de mesure 20. Il comporte aussi des moyens de positionnement et de centrage 27—29 et 33, 40. Quand le déviateur est disposé sur la tête de mesure 20, les moyens et de centrage 22 et de positionnement 23, constitués par exemple par des pinces auto-centrantes, viennent saisir le déviateur par l'arrière, c'est-à-dire par la section la plus faible du déviateur dite aussi région d'entrée des faisceaux d'électrons. Le déviateur repose sur une portée 23a de l'appareil de mesure de manière à entourer la tête de mesure 20. Le déviateur comporte une partie 24 constituée par la bobine de déviation trame montée sur une ferrite mobile par rapport au séparateur et à la bobine de déviation de ligne attachée à ce séparateur 25. La partie mobile 24 peut être mue par un dispositif 27—29 et 33, 40 de positionnement et de centrage du bobinage de trame par rapport au bobinage de ligne selon un premier axe x et un second axe y qui peuvent être sensiblement orthogonaux.

Dans l'appareil de réglage selon l'invention il s'agit de réaliser principalement la première opération de réglage d'une manière particulière propre au procédé de l'invention. Pour cela il s'agit de déplacer selon les axes x et y la ferrite 24 relativement à son séparateur 25 fixé par les moyens de centrage et de support 22, 23. La tête de mesure 20 est alignée sur un axe central 41 qui simule un axe magnétique idéal. L'axe 41 est semblable à l'axe central du déviateur, direction de propagation des faisceaux d'électrons non déviés. Pour réaliser la mesure, deux chaînes d'alimentation sont prévues l'une 34, 35, 38 associée au balayage de trame l'autre 36, 37, 39 associée au balayage de ligne. Chaque chaîne comporte un oscillateur à fréquence de trame ou à fréquence de ligne, un amplificateur et une connexion aux fils de sortie des bobinages de trame ou de ligne. Dans un exemple préféré de réalisation, on a choisi des signaux sinusoïdaux de fréquences respectivement compatibles avec les balayages de ligne et de trame non multiples l'un de l'autre, le balayage trame étant simulé à 285 Hz et le balayage de ligne à 3 000 Hz.

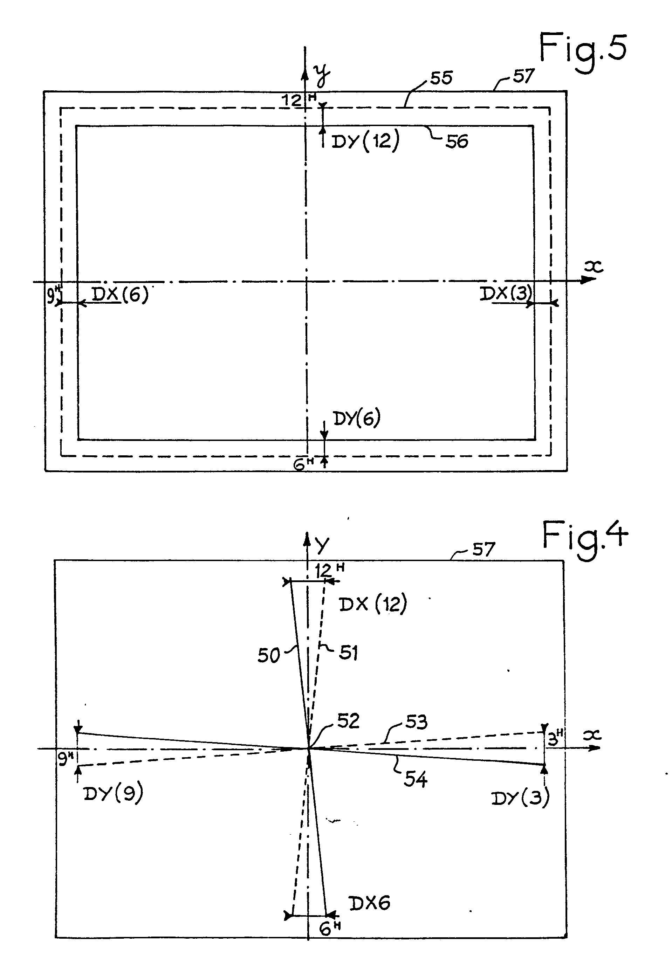

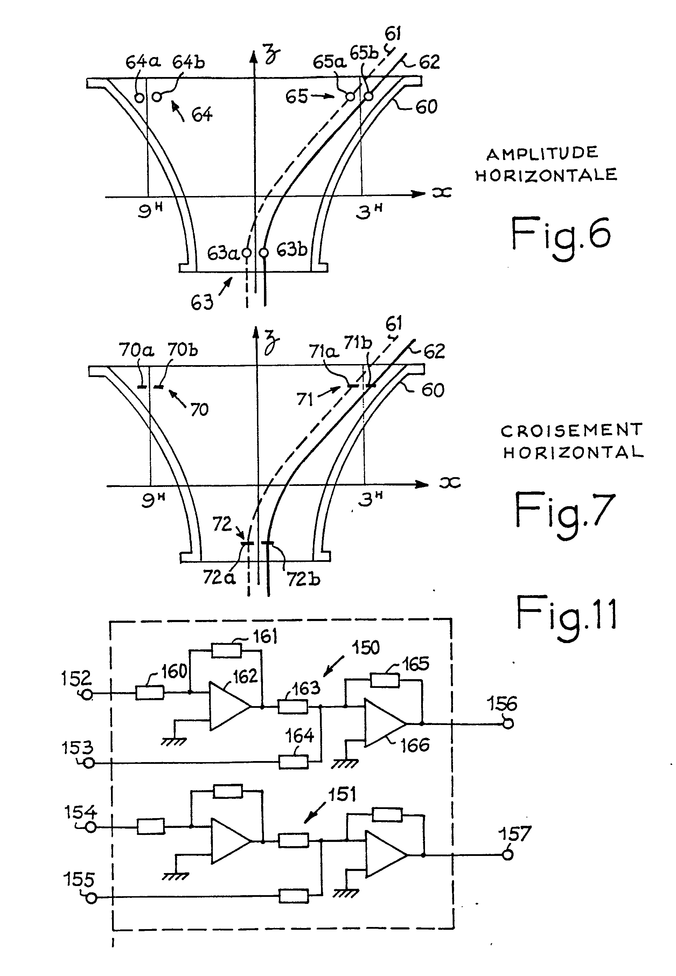

Les données 30 issues de la tête de mesure sont fournies à un calculateur 31 qui calcule les coefficients qui étant dans l'art antérieur mesurés par le moyen des mires affichées sur les tubes d'essais décrits ci-dessus. Ces quatres paramètres principaux seront décrits à l'aide des figures 4 et 5. De même aux figures 6 à 9 on décrira la structure d'une tête de mesure adaptée à l'invention. Le calculateur fourni un signal d'erreur 42 qui est une mesure analogique ou numérique des tensions proportionnelles aux décalages angulaires des axes du déviateur avec l'axe de la tête. Il permet de déterminer un déplacement de l'axe x et un déplacement de l'axe y qui réalisent une répartition optimale des quatre paramètres. Pour réaliser ce déplacement dans un premier mode de réalisation, un opérateur ajuste manuellement au moyen de vis de déplacement la position de la ferrite 24 jusqu'à annuler le signal d'erreur 42 lu par exemple sur une batterie de gavanomètre.

Dans un autre exemple de réalisation le signal d'erreur 42 est fourni à un asservissement 32 qui fournie l'alimentation ou la commande d'un moteur 29 ou 33 responsable des mouvements d'un patin 27 pour l'axe x ou 40 pour l'axe y. Les patins 27 ou 40 permettent de repousser la ferrite. Le mouvement de celle-ci sur le déviateur est donc toujours dans le plan orthogonal à l'axe 41 c'est-à-dire sensiblement l'axe de révolution du déviateur lui-même. Les signaux issus du générateur d'asservissement 32 sont, ainsi qu'il est connu de l'homme de métier, fonction de la nature du moteur.

A la figure 3 on a représenté schématiquement les moyens de positionnement et de centrage. Ceux-ci sont constitués principalement par une pince auto-centrante 22, 23 dont le profil permet une saisie de la couronne arrière du déviateur 21. Quand la pince 22, 23 est actionnée, son profil permet d'aider le centrage et la fixation de l'arrière du déviateur.

Aux figures 4 et 5 on a représenté un écran 57 sur lequel est affichée une série de mires utilisées selon l'art antérieur pour régler les déviateurs. A l'aide de ces deux figures on va expliquer les quatre paramètres caractéristiques utilisés par l'invention.

A la figure 4 on a représenté à l'intérieur de l'écran 57 une mire constituée par deux croix de mêmes centres placées au centre 52 de l'écran, une première croix rouge constituée de lignes 50 et 54 et une seconde croix bleue constituée de lignes 51 et 53. Cette mire de croisements permet de mesurer les paramètres de croisement horizontal et de croisement vertical. Sur l'écran 57 on a défini les quatre points cardinaux 3H, 6H, 9H, 12H associés aux axes x et y. Les écarts entre les extrémités des croix bleues et rouges mesurent les défauts de déviation entraînés par un mauvais postionnement de la trame par rapport à la ligne. On défini ainsi des écarts DX (12), DX (6) des extrémités verticales des croix, et des écarts DY (9) et DY (3) des extrémités horizontales des deux mêmes croix. On peut définir ainsi un coefficient de croisement horizontal CH défini par la relation:

$$CH = \tfrac{1}{2}(DY\,(9) - DY\,(3))$$

On défini aussi un croisement vertical défini par la relation:

$$CV = \tfrac{1}{2}(DX\,(12) - DX\,(6))$$

4

**EP 0 175 619 B1**

On remarquera que les écarts entrant dans le calcul de CH et CV correspondent à des maximums de déviation.

A la figure 5 l'écran 57 présente une mire constituée de deux rectangles rouge et bleu. Le rectangle rouge 56 et le rectangle bleu 55 permettent de mesurer deux coefficients d'amplitude: les coefficients d'amplitude horizontale AH et d'amplitude verticale AV. Comme précédemment, on définit les écarts avec leurs signes relativement aux axes x et y DX (3), DX (9), DY (12), DY (6).

Le paramètre d'amplitude horizontale AH est défini par la relation:

$$AH = \tfrac{1}{2}(DX\ (3) - DX\ (9))$$

Le paramètre d'amplitude verticale AV est défini par la relation:

$$AV = \tfrac{1}{2}(DY\ (12) - DY\ (6)).$$

Dans le procédé selon l'invention on s'affranchit de la mesure de ces huit dimensions qu'un opérateur doit évaluer une première fois au réglage proprement dit du déviateur, une seconde fois au montage du déviateur sur son tube définitif. Pour cela on utilise le fait que ces mesures correspondent aux déviations maximales dans les plans contenant les axes x et y. Aux figures 6 à 9 on a représenté un déviateur coupé dans lequel on mesure des champs de manière à éviter l'utilisation des mires décrites aux figures 4 et 5. On a représenté seulement la forme 60 du déviateur dans le plan représenté à chacune des figures 6 à 9. Les faisceaux d'électrons entrent dans la région arrière du déviateur le long de l'axe z. Cette région arrière est de section plus faible que la section terminale de sortie des électrons.

Dans la définition des quatre paramètres caractéristiques utilisés par l'invention, on remarque que les éléments géométriques sont des différences de différences. Ainsi pour chaque point de mesure, il s'agit de reconnaître l'écart entre une trace rouge et une trace bleue qui sont aux extrémités de déviation, ces deux traces étant les plus éloignées l'une de l'autre parmi les trois faisceaux. Dans la région de sortie du déviateur, il faut donc disposer des sondes susceptibles de mesurer des différences de champ. C'est un mérite de l'invention d'avoir découvert que cette mesure de gradients permet de représenter les différences rentrant dans la définition des quatre paramètres d'un réglage de déviateur.

A la figure 6, on montre une coupe dans laquelle on indique la zone de mesure de chaque gradient de champ utilisé pour le paramètre d'amplitude horizontale AH. Dans la région de sortie du déviateur, on dispose dans le plan contenant les axes x et z des paires de bobinettes 64 et 65 la paire 64 étant destinée à mesurer le gradient de champ effectant les deux faisceaux extrêmes allant vers un point d'impact 9H00 et la paire de bobinettes 65 étant destinée à mesurer le gradient de champ affectant les deux faisceaux extrêmes 61 et 62 rouge et bleu allant au point 3H00 de l'écran. Il va de soi que dans l'appareil de mesure mettant en oeuvre le procédé de l'invention, l'absence de tube fait que les faisceaux 61 et 62 sont simplement simulés. Il n'y a pas de charge traversant l'appareil de mesure. Pour reconnaître plus spécialement les erreurs que le déviateur introduit dans sa région d'entrée, on dispose au voisinage de l'axe z une paire de bobinettes 63 qui permettra de ramener sur les coefficients de gradients de champ l'influence de la zone arrière du déviateur. Dans le plan x, z les paires de bobinettes 64 et 65 sont disposées sensiblement sur le bord du volume de déviation. Elles sont situées dans la zone avant dans une localisation dont le critère de choix sera précisé plus loin. Pour la mesure du paramètre AH dit d'amplitude horizontale les bobinettes sont constituées par des petits solénoïdes dont l'axe est parallèle à l'axe y.

A la figure 7 on a représenté un schéma de disposition des bobinettes pour la mesure des coefficients CH de croisement horizontal. Les bobinettes sont des solénoïdes d'axes parallèles à l'axe x. Elles sont disposées dans le plan x, z comme précédemment.

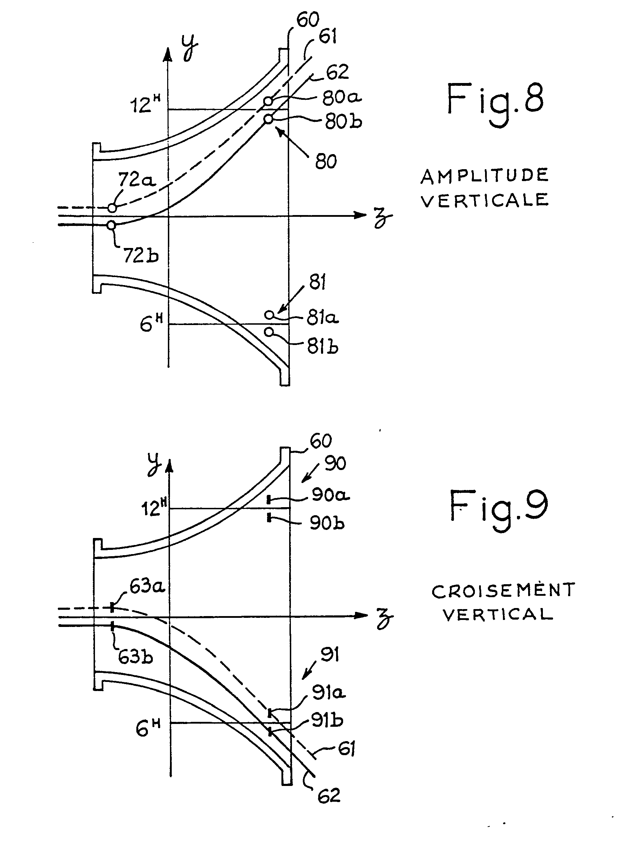

A la figure 8 on a représenté un schéma de disposition des bobinettes pour la mesure du coefficient d'amplitude verticale AV. Les bobinettes sont disposées dans le plan y, z et sont d'axe parallèle à l'axe x. Les paires de bobinettes 80, 81 situées dans la partie avant du déviateur correspondent au point de déviation à 12H00 et à 6H00 sur la mire de l'art antérieur.

La paire de bobinettes arrière 72 est constituée par la paire de bobinettes qui est déjà utilisée à la figure 7 pour la mesure du paramètre de croisement horizontal CH.

A la figure 9 on a représenté un schéma de disposition des bobinettes pour la mesure du paramètre de croisement vertical CV. Les bobinettes sont situées dans le plan y, z et comporte une paire de bobinettes 90 qui mesure le gradient de champ pour la déviation à 12H00 et une paire de bobinettes 91 pour la déviation à 6H00. La paire de bobinettes 63 est constituée par les bobinettes utilisées pour la mesure du paramètre d'amplitude horizontal de la figure 6.

Aux figures 6 à 9 chaque paire de bobinettes comporte deux bobinettes absolument semblables dont les repérages sont faits par le repère de la paire de bobinettes avec un indice a ou b selon la bobinette de la paire.

Chaque bobinette est constituée par une vingtaine de spires réparties en quatre couches montées sur un mandrin. Selon l'invention la tête de mesure est constituée par un corps en matière synthétique dans lequel les paires de bobinettes sont noyées. Dans un mode de réalisation, les bobinettes sont disposées dans le corps après perçage avec une précision de l'ordre du centième. La présente invention peut utiliser tout autre genre de capteur sensible au champ magnétique.

5

Chaque paramètre est donc mesuré par trois paires de bobinettes. Ceci correspond en fait à deux échantillonnages du champ selon l'axe oz. Dans une variante de l'invention on dispose une paire de bobinettes supplémentaire pour achever un troisième échantillonnage dans une région proche des centres de déviation ligne ou trame.

Dans l'exemple de réalisation préféré, la tête de mesure de l'appareil de l'invention comporte en fait dix paires de bobinettes réparties: deux paires de bobinettes dans la zone arrière et huit paires de bobinettes dans la zone avant.

L'obtention d'une mesure précise des défauts d'asymétrie de convergences par un mesure de gradient de champ en un nombre de points limité du volume de déviation est très dépendante du choix correcte des positions en x, y et surtout z de ces points et donc des capteurs.

En x, y le choix est simple chacune des deux bobinettes d'un capteur est positionnée respectivement sur les passages des trajectoires rouge et blanc (canaux latéraux) pour la valeur z considérée, les trajectoires étant celles de points de référence 3H-9H-6H-12H.

Ces trajectoires sont prédéterminées une fois pour toutes, par un calcul, à partir de mesures de champ fixes réalisées en laboratoire dans tout le volume de déviation d'un déviateur de référence.

Le choix des "plans d'échantillonnage" le long de z est lui plus délicat et déterminant.

Les asymétries du champ de déviation par rapport à un axe oz défini en pratique par les références 22—23 ont divers origines: ce peut être en particulier un simple décentrage des bobines par translation avec inclinaison par rapport à OZ, ou un assemblage incorrect de bobines lignes, ou encore des anomalies de bobinages trame ou ligne, ou des déformations de ferrites ou de bobines lignes, ces derniers types de défauts pouvant être relativement localisés le long de Z.

En première approximation le champ de déviation pour chaque direction et constitué dans chaque plan XY(z):

— d'un champ uniforme noté Ho(z);

— d'une composante $H_2(z)$ déterminant l'auto-convergence, la correction de coussin, etc. Cette fonction $H_2(z)$ défini les propriétés nominales du déviateur;

— d'une composante $H_1(z)$ qui idéalement doit être à zéro car elle représente les asymétries décrites ci-dessus;

— des composantes d'ordre plus élevé, d'influence limitée en l'objet.

Pour chaque z et le long de l'axe ox:

$$H_y = H_0(z) + H_1(z) \cdot X + H_2(z) \cdot X^2 + \ldots$$

en vertical le long de oy:

$$V_x = V_o(z) + V_1(z) \cdot Y_2 + V_2(z) \cdot Y^2 + \ldots$$

Si nous considérons Hy et le paramètre d'amplitude horizontale AH, le champ mesuré de chaque bobinette dans un capteur de gradient sera:

— en rouge (canon externe gauche)

$$HR = Ho + H_1(x-a) + H_2(x-a)^2$$

en bleu (canon externe droit)

$$HB = Ho + H_1(x+a) + H_2(x+a)^2$$

avec 2a=écartement des trajectoires rouge-bleu. x=position par rapport à l'axe du déviateur.

Si la position de la trajectoire centrale (verte) pour le point 3H par rapport à l'axe idéal du tube matérialié par 22—23 est X

$$x = X - d$$

d étant l'écart pour Z donné entre cet axe et l'axe magnétique du déviateur.

Dans ce cas le gradient mesuré par un capteur 3H est:

$$(HB-HR)_3 = 2aH_1 + 4(X-d)aH_2$$

pour 9H:

$$(HB-HR)_9 = -2aH_1 + 4(x+d)aH_2$$

La différence des gradients 3H—9H exprimant le défaut d'amplitude local AH est alors:

$$AH = k(HB-HR)_3 - (HB-HR)_9 = k(4aH_{1-8 \, d.a.H})$$

En zone arrière, les trajectoires n'étant pratiquement pas déviées le capteur 3H se trouve confondu avec celui correspondant à 9H, un seul capteur sera donc utilisé en pratique, le signal délivré étant moitié, un supplément de gain de 2 sera appliqué à la chaîne d'amplification correspondante.

L'expression de AH ci-dessus montre que le désalignement d permet localement une compensation des asymétries H1, c'est-à-dire par décentrement de la composante parabolique H2. Ceci est vrai localement dans un tranche dz. En fait, si nous intégrons en z sur toute la trajectoire la somme $8\int d(z)a(z)H2(z)\,dz$ peut tout aussi bien compenser la somme des asymétries $4\int a(z) \cdot H1(z)dz$. La fonction $d(z)$ est en générale de forme simple puisque correspondant à une inclinaison ou une translation du déviateur par rapport à l'axe de référence.

$a(s)$ est très monotone traduisant la convergence des faisceaux, elle varie dans le domaine d'existence de H2 et H1.

Les fonctions $H1(z)$ et $H2(z)$ sont par contre plus tourmentées.

$H2(z)$ fait partie du design du produit et est parfaitement connue et stable (figure 13) mais change deux fois de signe au long de z. En verticale l'homologue V2 est souvent plus monotone toujours négative (figure 13). Une pondération AR—AV des gains des chaînes d'acquisition permet la prise en compte de ces faits.

Les fonctions H1 et V1 représentatives des défauts décrits précédemment dépendent du process de fabrication et de la technologie du déviateur.

Pour chaque type de produit, seule une analyse expérimentale formée permet de déterminer le nombre de plans d'échantillonnage, leurs positions, et leurs pondérations éventuelles, (coefficients relatif avant-arrière).

Notre expérieuce nous a montré que deux plans complets (dispositif décrit en figures 6, 7, soit trois paires de bobines) étaient au moins nécessaires; dans une variante de l'invention des points de mesures complémentaires sont ajoutés dans la zone des centres de déviation, mais pour une partie des paramètres seulement.

Tout ce qui a été exposé ci-dessus à propos du paramètre d'amplitude horizontale peut l'être identiquement pour AV, CH, CV.

Nous voyons donc que quatre décentrements suivant x et y aussi bien trame qu'en ligne soit:

$$d_{Tx},\ d_{Ty},\ d_{Lx},\ d_{Ly}$$

permettent de contrôler respectivement:

$$AV,\ CV,\ AH,\ CH.$$

La deuxième opération de réglage sur tube définitif a pour but de mettre AV et CV à zéro par déplacement de l'ensemble du déviateur dans lequel ligne et trame sont alors solidaires. Une annulation simultanée de AH et CH est alors obtenue si des valeurs convenables de:

$$d_{Tx}-d_{Lx}\ et\ d_{Ty}-d_{Ly}$$

ont été obtenue lors de la première opération sur tube d'essai dans l'art antérieur ou par notre invention. Alors que sur tube d'essai dans l'art antérieur les quatre mouvements

$$d_{Tx},\ d_{Ty},\ d_{Lx},\ d_{Ly}$$

doivent être réalisés mécaniquement, dans le cas de l'invention nous avons grandement simplifié le dispositif en ne mécanisant que le déplacement de l'ensemble ferrite-trame (figure 3). L'effet des déplacements $d_{Lx}$ et $d_{Ly}$ sur les paramètres de convergence est simplement calculé à partir des mesures et non matérialisé par un déplacement mécanique. Ceci est grandement facilité par la constatation que nous avons faite que les erreurs AV et AH ainsi que CV et CH restent en général linéaires entre elles quand on fait varier dx et dy:

$$AV(dx)=a \cdot AH(dx)+G(d_{Tx}-d_{Lx})$$

$$CV(dy)=f(d_{Ty}-d_{Ly})+\beta \cdot CH(dy)$$

L'annulation simultanée des amplitudes et croisements sur tube final, par dx et dy, sera rendue possible par des valeurs de

$$d_{Tx}-d_{Lx}\ et\ d_{Ty}-d_{Ly}$$

telles que

$$AV-a \cdot AH=E_c \rightarrow 0$$

$$CV-\beta \cdot CH=E_c \rightarrow 0$$

La combinaison des mesures AV et AH avec un coefficient α constitue donc le signal d'erreur $E_a$ qui permettra à un asservissement d'ajuster $d_{Tx}-d_{Lx}$; la fonction G étant relativement monotone.

Par ailleurs la consigne, Q, peut, dans certains cas, être différente de zéro.

Soit

$$AV-\alpha \cdot AH-Q_a=E_a\rightarrow 0$$

Le raisonnement est identique pour les croisements soit:

$$CV-\beta \cdot CH-Q_c=E_c\rightarrow 0$$

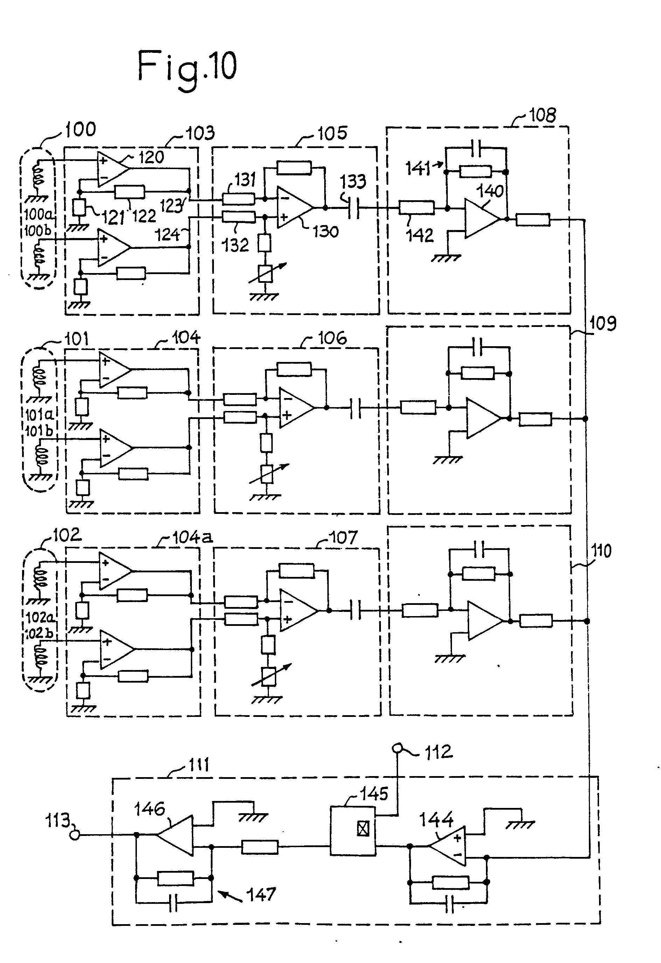

A la figure 10 on a représenté une chaîne permettant d'élaborer un des paramètres décrit ci-dessus. On a représenté chaque paire de bobinettes 100, 101, 102 utilisée pour élaborer le signal 113. La paire de bobinettes 100 provient de la zone arrière et correspond donc aux paires de bobinettes 72, 63 des figures 6 à 9. Les bobinettes 100 et 102 correspondent aux bobinettes droites ou gauches dans l'une des quelconques figures 6 à 9. On remarque que chacune des lignes relées aux paires de bobinettes est identique et on ne décrit que la chaîne supérieure au dessin de la figure 10. Les paires de bobinettes sont reliées chacune à un montage amplificateur 103, 104. Les sorties de chacun de ces montages sont fournies aux entrées de différenciateur 105—107. A la sortie de ces différenciateurs on obtient les gradients de champ décrits ci-dessus. Ces valeurs sont fournies à des intégrateurs 108—110 dont les sorties sont connectées ensembles à l'entrée d'un circuit produisant une composante continue 113 qui servira de signal d'erreur pour l'un quelconque des quatre paramètres selon l'affectation des paires de bobinettes 100—102.

L'amplificateur 102 comporte pour chacune des bobinettes 100a ou 100b un amplificateur opérationnel 120 connecté à un réseau de résistances de réaction 121, 122 connecté sur la sortie 123 de l'amplificateur opérationnel 120.

Chaque signal adapté sortant de l'un des amplificateurs décrits ci-dessus est fourni à une entrée d'un différenciateur constitué par un amplificateur opérationnel 130 dont les entrées sont chargées à travers des résistances 131 ou 132. Un condensateur 133 assure un premier filtrage. Chacun des différenciateurs est ensuite fourni à un filtre 108 qui réalise un filtrate passe-bande à phase constante. Un tel filtre est constitué par un amplificateur opérationnel 140 chargé par un réseau RC en parallèle 141 et une résistance 142 sur l'entrée chaude. Les sorties des trois chaînes issues des bobinettes 100—103 sont réunies ensembles à l'entrée du circuit 111. L'entrée du circuit est founie à un montage additionneur constitué par un amplificateur opérationnel 144 dont la sortie fournie une somme avec intégration par le réseau RC qui contre-réactionne le point chaud de l'amplificateur 144, la somme réalisant une combinaison linéaire des gradients de champ de chacune des paires de bobinettes. Les coefficients affectant les gradients qui sont simulés par les différents gains dans chacun des étages 103, 105, 108 ou 104, 106, 109 ou 104, 107, 110 correspondent au coefficient d'influence de l'arrière sur l'avant décrit ci-dessus. Dans le circuit 111 la sortie du montage additionneur 144 est fournie à un décodeur synchrone. dont l'autre entrée est reliée à l'oscillateur maître responsable du balayage ou de la simulation du balayage ligne ou trame. Ainsi la entrée 112 reçoit la fréquence de balayage de ligne pour les coefficients d'amplitude horizontale AH et de croisement horizontal CH ou de fréquence de balayage de trame pour les coefficients de croisement vertical et d'amplitude verticale. Le décodage synchrone fourni un signal de sortie de détection dont on filtre la composante continue par la cellule de filtre 147 battie autour de l'amplificateur opérationnel 146 (coefficients α,β ci-dessus).

Le circuit de la figure 10 correspond au calculateur 31 de la figure 3. Un tel calculateur a été réalisé de manière analogique. Dans un autre mode de réalisation les signaux issus des capteurs 100, 101, 102 sont numérisés et fournis par une interface convenable à un processeur digital qui peut élaborer un signal 42 selon la figure 3 de forme digitale propre à fournir les signaux d'erreur analogues à creux décrits à la figure 10. Le calculateur 31 de la figure 3 comporte donc quatre circuits semblables à ceux de la figure 10 dans le cas d'un calculateur analogique. A la figure 11 on a représenté un circuit susceptible de servir à engendrer deux signaux 156, 157 d'asservissement de moteurs 33 ou 29 de l'exemple de réalisation de la figure 3. Chacun des quatre paramètres calculé selon par exemple les circuits de la figure 10, sont fournis aux entrées 152, 155 du circuit de la figure 11. Par sommation ils sont associées en une combinaison linéaire qui simule électriquement les conditions pour que le déviateur soit réglé de manière optimale selon l'invention.

Le circuit de la figure 11 comporte deux chaînes séparées indépendantes 150 et 151. La chaîne 150 comporte deux entrées 152 recevant le signal d'amplitude horizontal AH et 153 d'amplitude verticale AV. La chaîne 151 reçoit de même par l'entrée 154 le circuit de croisement vertical CV et par l'entrée 155 le signal de croisement horizontal CH. Les deux chaînes étant identiques on décrit maintenant la chaîne 150. L'entrée 152 qui reçoit le signal d'amplitude horizontale est fourni à un amplificateur inverseur de gain unité. La sortie de cet amplificateur est fournie ainsi que l'entrée 153 à un additionneur constitué par l'amplificateur opérationnel 166. Le signal 156 de sortie est une combinaison linéaire des deux entrées 152, 153 dont les coefficients dépendent des rapports des résistances 163 à 165 et 164 à 165. Le signal ainsi constitué peut servir à exciter une interface d'alimentation des moteurs 29 ou 33 de la figure 3.

A la figure 12 on a représenté un circuit annexe du calculateur 31 de la figure 3 réalisé lui aussi en technique analogique. Avant la mise en place des opérations décrites du procédé de l'invention, il faut d'abord réaliser un réglage de l'orthogonalité des bobines de ligne et de trame afin que les champs ligne et trame soient réellement orthogonaux ou sensiblement orthogonaux. Pour cela on utilise la bobine de trame comme capteur du champ ligne. L'ampli 34 de trame fourni par la ligne 202 est déconnecté par le connecteur 102. Le bobinage 200 de trame est donc mis à l'entrée d'un transformateur 203 qui dans un exemple de réalisation préféré est de rapport de spires de 250. La sortie du transformateur 203 est fournie à un amplificateur de gains élevés 204. La sortie de cet amplificateur est fournie à un détecteur synchrone 205 dont l'autre entrée est connectée à l'oscillateur de ligne 37. On utilise ainsi qu'on a vu à la figure 11 une cellule de filtrage de la composante continue 206 qui fournit un signal d'erreur 207 qu'il s'agit d'annuler par rotation de la trame 24 relativement au séparateur 25. L'asservissement qui n'a pas été représenté à la figure 3 est facile à réaliser par l'homme de métier.

Une fois le procédé de réglage exécuté, la ferrite 24 est immobilisée au moins temporairement sur le séparateur de manière à conserver le réglage. Dans l'exemple de réalisation, la ferrite est collée à chaud sur le séparateur.

**Revendications**

1. Procédé de réglage d'un déviateur pour tube de télévision à trois canons en ligne caractérisé en ce qu'il consiste:

1) à disposer le déviateur (21) sur une tête de mesure comportant des capteurs de gradients de champ (20);

2) à mesurer des gradients des champs de trame et de ligne dans au moins une zone arrière et une zone avant du déviateur;

3) à déplacer par rapport à la bobine de déviation de ligne autour d'un axe central (41) de la tête de mesure la bobine de trame montée sur une ferrite (24) support de manière à réaliser l'orthogonalité des champs de trame et de ligne;

4) à simuler un alignement du déviateur sur un tube de télévision en mesurant avec la tête de mesure des signaux proportionnels au décalage angulaire entre l'axe (41) de la tête et chaque axe de symétrie moyen des champs ligne et trame;

5) à déplacer la ferrite dans au moins une direction (x et/ou y) du plan orthogonal à l'axe (41) de la tête de mesure de manière à annuler chacun des signaux proportionnels;

6) à fixer, au moins temporairement, la ferrite relativement au bobinage de ligne.

2. Procédé selon la revendication 1, caractérisé en ce qu'on réalise d'abord le réglage de l'orthogonalité des champs ligne et trame en mesurant le courant induit dans le bobinage de trame par la bobine de ligne (26) connectée à un générateur de balayage (36, 37) et à annuler ce courant par rotation de la ferrite (24) portant la bobine de trame.

3. Procédé selon la revendication 1, caractérisé en ce que pour chacun des paramètres d'amplitudes horizontale (AH), verticale (AV), de croisements horizontal (CH) ou vertical (CV) on mesure un gradient de champ à l'arrière du déviateur et deux gradients de champ à l'avant du déviateur symétriquement de part et d'autre de l'axe central (41) et en ce que chacun des paramètres est mesuré par combinaison linéaire des trois gradients, les coefficients de la combinaison linéaire étant des mesures des influences relatives des zones arrière et avant du déviateur, les paramètres AH, AV, CH, CV étant respectivement définis par les relations:

$$AH=\tfrac{1}{2}\{DX(3)-DX(9)\} \qquad AV=\tfrac{1}{2}\{DY(12)-DY(6)\}$$
$$CH=\tfrac{1}{2}\{DY(9)-DY(3)\} \qquad CV=\tfrac{1}{2}\{DX(12)-DX(6)\}$$

DX(6), DX(12) et DY(9), DY(3) étant respectivement les écarts entre les extrémités verticales et horizontales de croix bleues et rouges passant par le centre de l'écran, et DX(3), DE(9), DY(12), DY(6) étant respectivement les écarts aux points cardinaux Est, Ouest, Nord, Sud entre les côtés d'un rectangle bleu et d'un rectangle rouge formés le long des bords de l'écran du tube cathodique mesuré.

4. Procédé selon la revendication 3, caractérisé en ce que le déplacement de la ferrite (24) selon l'axe x est commandé de façon à annuler un signal d'erreur constitué par une combinaison linéaire des paramètres d'amplitudes horizontale (AH) et verticale (AV).

5. Procédé selon la revendication 3, caractérisé en ce que le déplacement de la ferrite (24) selon l'axe y est commandé de façon à annuler un signal d'erreur constitué par une combinaison linéaire des paramètres de croisements vertical (CV) et horizontal (CH).

6. Appareil mettant en oeuvre le procédé selon l'une des revendications 1 à 5, caractérisé en ce qu'il comporte:

— des moyens de support et de centrage (22, 23) du déviateur (21);

— une tête de mesure (20) comportant des capteurs de gradients de champ d'une part dans la zone avant du déviateur d'autre part dans la zone arrière du déviateur;

— deux chaînes d'alimentation de balayage de ligne (36, 37) et de trame (34, 35) connectées auxdites bobines;

— un calculateur (31) de quatre paramètres d'amplitude verticale (AV) et horizontale (AH) et de croisements vertical (CV) et horizontal (CH);

— un circuit (32) qui élabore à partir des quatre signaux (42) simulant les quatre paramètres un signal d'asservissement des déplacements x et/ou y de la ferrite (24) sur le séparateur (25) dans un plan orthogonal à un axe central (21) de l'appareil, de manière à annuler des signaux d'erreur.

7. Appareil selon la revendication 6, caractérisé en ce que les capteurs sont constitués par des paires de bobinettes (110a, 100b).

8. Appareil selon la revendication 6, caractérisé en ce que la tête de mesure (21) comporte deux capteurs (72, 63) dans la zone arrière du déviateur au voisinage d'un axe (41) de l'appareil et huit capteurs (64, 65, 70, 71, 80, 81, 90, 91) dans la zone avant dans les deux plans contenant l'axe x de balayage y de ligne ou l'axe y de balayage de trame et orthogonale à l'axe z (41), les capteurs étant destinés à capter des champs orthogonaux deux à deux.

9. Appareil selon la revendication 6, caractérisé en ce que le calculateur (31) comporte pour chacun des quatre paramètres à simuler:
— un circuit (103, 105) calculant le gradient de champ de chaque capteur (100);
— un filtre passe-bande (108) pour chaque circuit (103, 105) à phase constante;
— un additionneur (144) qui réalise une combinaison linéaire des gradients issus d'un capteur de la zone arrière (100) et de deux capteurs de la zone avant (101, 102) réservés pour le calcul dudit paramètre;
— d'un décodeur synchrone (145) à la fréquence de ligne ou de trame selon le paramètre simulé;
— d'un filtre (146) fournissant une composante continue (113) simulant ledit paramètre.

10. Appareil selon la revendication 6, caractérisé en ce que le circuit (32) comporte deux chaînes, l'une (150) associée au déplacement x et une chaîne (151) au déplacement y, la chaîne (150) réalisant une combinaison linéaire des signaux simulant les paramètres d'amplitudes verticale (AV) et horizontale (AH), la chaîne (151) réalisant une combinaison linéaire des signaux simulant les paramètres de croisements vertical (CV) et horizontal (CH).

11. Appareil selon la revendication 10, caractérisé en ce que chaque chaîne (150, 151) réalise une sommation de ses deux entrées (152, 153) avec des coefficients déterminés par les rapports des résistances (163, 165 et 164, 165).

12. Appareil selon la revendication 10, caractérisé en ce que l'asservissement par des moteurs (33, 29) réalisant les déplacements de la ferrite (24) par des patins (27, 40) tend à annuler les signaux d'asservissement présents aux sorties (156, 157) du circuit (32).

13. Appareil selon la revendication 6, caractérisé en ce que le déviateur (21) repose sur une portée horizontale (23a).

14. Appareil selon la revendication 6, caractérisé en ce que les moyens de support et de centrage (22, 23) comportent une pince autocentrante venant saisir la couronne arrière du déviateur.

**Patentansprüche**

1. Verfahren zur Einstellung einer Ablenkeinheit für eine Fernsehröhre mit drei In-line-Elektronenkanonen, dadurch gekennzeichnet, daß
1) die Ablenkeinheit (21) auf einem Meßkopf angebracht wird, der Sonden (20) zur Messung der Feldgradienten enthält,
2) Feldgradienten in Richtung der Zeilen- und Vertikalablenkung in mindestens einer rückwärtigen Zone und einer vorderen Zone der Ablenkeinheit gemessen werden,
3) die Vertikalablenkspule, die auf einem Ferritkern (24) sitzt, bezüglich der Zeilenablenkspule um eine zentrale Achse (41) des Meßkopfs verschoben wird, um den rechten Winkel zwischen Zeilen und Vertikalablenkung herzustellen,
4) eine fluchtende Anordnung der Ablenkeinheit auf einer Fernsehröhre simuliert wird, indem mit dem Meßkopf zur Winkelverschiebung zwischen der Achse (41) des Kopfes und jeder mittleren Symmetrieachse der Zeilen- und Vertikalablenkfelder proportionale Signale gemessen werden,
5) der Ferritkern in mindestens einer Richtung (x und/oder y) in der zur Achse (41) des Meßkopfs senkrechten Ebene verschoben wird, bis jedes der proportionalen Signale verschwindet,
6) zumindest vorübergehend der Ferritkern bezüglich der Zeilenablenkspule festgelegt wird.

2. Verfahren nach Anspruch 1, dadurch gekennzeichnet, daß zuerst die orthogonale Lage der Zeilen- und Vertikalablenkfelder eingestellt wird, indem der in die Vertikalablenkspule von der an einen Ablenkgenerator (36, 37) angeschlossenen Zeilenablenkspule (26) induzierte Strom gemessen wird und indem dieser Strom durch Drehen des die Vertikalablenkspule tragenden Ferritkerns (24) zum Verschwinden gebracht wird.

3. Verfahren nach Anspruch 1, dadurch gekennzeichnet, daß für jeden der Parameter Horizontalamplitude (AH), VertikLMPLITUDE (AV), Horizontalkreuzung (CH) oder Vertikalkreuzung (CV) ein Feldgradient hinter der Ablenkeinheit und zwei Feldgradienten vor der Ablenkeinheit symmetrisch zu beiden Seiten der zentralen Achse (41) gemessen werden und daß jeder dieser Parameter durch lineare Kombination der drei Gradienten gemessen wird, wobei die Koeffizienten der linearen Kombination ein Maß für die relativen Einflüsse der rückwärtigen und vorderen Zonen der Ablenkeinheit sind und die Parameter AH, AV, CH, CV durch die vier folgenden Beziehungen definiert sind:

$$AH = \tfrac{1}{2}\{DX(3) - DX(9)\} \qquad AV = \tfrac{1}{2}\{DY(12) - DY(6)\}$$

$$CH=\tfrac{1}{2}\{DY(9)-DY(3)\} \qquad CV=\tfrac{1}{2}\{DX(12)-DX(6)\}$$

wobei DX(6), DX(12) und DY (9), DY(3) die Abstände zwischen den vertikalen und horizontalen Enden blauer und roter Kreuze sind, die durch das Zentrum des Bildschirms verlaufen, und DX(3), DX(9), DY(12), DY(6) die Abstände an den Kardinalpunkten Ost, West, Nord und Süd zwischen den Seiten eines blauen und eines roten Rechtecks sind, die entlang der Ränder des Bildschirms der gemessenen Kathodenstrahlröhre gebildet werden.

4. Verfahren nach Anspruch 3, dadurch gekennzeichnet, daß die Verschiebung des Ferritkerns (24) in Richtung der x-Achse so gesteuert wird, daß ein Fehlersignal, das von einer linearen Kombination der horizontalen und vertikalen Amplitudenparameter (AH, AV) verschwindet.

5. Verfahren nach Anspruch 3, dadurch gekennzeichnet, daß die Verschiebung des Ferritkerns (24) in Richtung der y-Achse so gesteuert wird, daß eine Fehlersignal, das von einer linearen Kombination der vertikalen und horizontalen Kreuzungsparameter (CV, CH) gebildet wird.

6. Gerät zur Durchführung des Verfahrens nach einem der Ansprüche 1 bis 5, dadurch gekennzeichnet, daß es aufweist
— Mittel (22, 23) zum Tragen und Zentrieren der Ablenkeinheit (21),
— einen Meßkopf (20) mit Sonden zur Messung der Feldgradienten einerseits in der Zone vor der Ablenkeinheit und andererseits in der Zone hinter der Ablenkeinheit,
— zwei Einrichtungen zur Lieferung von Zeilenablenkströmen (36, 37) und Vertikalablenkströmen (34, 35) zur Speisung der Ablenkspulen,
— einen Rechner (31) zur Berechnung von vier Parametern, nämlich einem vertikalen und einem horizontalen Amplitudenparameter (AV, AH) und einem vertikalen und einem horizontalen Kreuzungsparameter (CV, CH),
— einen Kreis (32), der ausgehend von den vier Signalen (42), die die vier Parameter simulieren, ein Nachführsignal für den Ferritkern (24) auf dem Separator (25) in x- und/oder y-Richtung in einer Ebene senkrecht zur zentralen Achse (41) des Geräts erarbeitet, so daß Fehlersignale verschwinden.

7. Gerät nach Anspruch 6, dadurch gekennzeichnet, daß die Sonden aus Meßspulenpaaren (100a, 100b) bestehen.

8. Gerät nach Anspruch 6, dadurch gekennzeichnet, daß der Meßkopf (21) zwei Sonden (72, 63) in der Zone hinter der Ablenkeinheit in der Nähe einer Achse (41) des Geräts und acht Sonden (64, 65, 70, 71, 80, 81, 90, 91) in der vorderen Zone in zwei Ebenen aufweist, die die Achse x der Zeilenablenkung oder die Achse y der Vertikalablenkung enthalten und die senkrecht zur Achse z (41) verlaufen, wobei die Sonden dazu bestimmt sind, paarweise orthogonale Felder zu erfassen.

9. Gerät nach Anspruch 6, dadurch gekennzeichnet, daß der Rechner (31) für jeden der vier zu simulierenden Parameter aufweist
— einen Rechenkreis (103, 105) zur Berechnung des Feldgradienten jeder Sonde (100), ein Tiefpaßfilter (108) mit konstanter Phase für jeden Kreis (103, 105),
— einen Addierer (144), der eine lineare Kombination der von einem von einer Sonde der rückwärtigen Zone (100) und von zwei Sonden der vorderen Zone (101, 102), die für die Berechnung dieses Parameters reserviert sind, kommenden Gradienten durchführt,
— einen Dekodierer (145), der synchron mit der Zeilen- oder Vertikalfrequenz gemäß dem simulierten Parameter dekodiert,
— ein Filter (146), das eine Gleichstromkomponente (113) liefert, welche diesen Parameter simuliert.

10. Gerät nach Anspruch 6, dadurch gekennzeichnet, daß der Kreis (32) zwei Kanäle aufweist, von denen der eine (150) der Verschiebung in x-Richtung und der andere (151) der Verschiebung in y-Richtung zugeordnet ist, wobei im Kanal (150) eine lineare Kombination der die Parameter vertikaler und horizontaler Amplitude (AV, AH) simulierenden Signale durchgeführt wird, während in anderen Kanal (151) eine lineare Kombination der die Parameter vertikaler und horizontaler Kreuzung (CV, CH) durchgeführt wird.

11. Gerät nach Anspruch 10, dadurch gekennzeichnet, daß in jeden Kanal (150, 151) eine Addition seiner beiden Eingänge (152, 153) mit durch Widerstandsteiler (163, 165 und 164, 165) bestimmten Koeffizienten erfolgt.

12. Gerät nach Anspruch 10, dadurch gekennzeichnet, daß die Nachführung durch Motoren (33, 29), durch die der Ferritkern (24) über Gleitschuhe (27, 40) verschoben wird, die Tendenz hat, die Regelsignale an den Ausgängen (156, 157) des Kreises (32) zum Verschwinden zu bringen.

13. Gerät nach Anspruch 6, dadurch gekennzeichnet, daß die Ablenkeinheit (21) auf einem waagrechten Traggerüst (23a) ruht.

14. Gerät nach Anspruch 6, dadurch gekennzeichnet, daß die Mittel zum Tragen und Zentrieren (22, 23) eine sich selbst zentrierende Zange aufweisen, die den rückwärtigen Kranz der Ablenkeinheit erfaßt.

**Claims**

1. A method for adjusting the deflection unit of a TV tube having three inline guns, characterized in that it consists

**EP 0 175 619 B1**

1) in disposing the deflection unit (21) on a measuring head comprising probes for measuring the field gradient (20),

2) in measuring vertical field gradients and line field gradients in at least one rear zone and one front zone of the deflection unit,

3) in displacing the vertical deflection coil mounted on a ferrite (24) support with respect to the line deflection coil about a central axis (41) of the measuring head in order to achieve the orthogonal relationship between the vertical field and the line field,

4) in simulating an alignment of the deflection unit on a TV tube by measuring signals with the measuring head which are proportional to the angular shift between the axis (41) of the head and each mean axis of symmetry of the line field and the vertical field,

5) in displacing the ferrite in at least one direction (x and/or y) of the plane perpendicular to the axis (41) of the measuring head in order to make disappear each one of the proportional signals,

6) in securing at least temporarily the ferrite with respect to the line coil.

2. A method according to claim 1, characterized in that firstly the orthogonal relationship of the line field and vertical the field is adjusted by measuring the current induced in the vertical coil by the line coil (26) connected to a scanning generator (36, 37), and then this current is made to disappear by turning the ferrite (24) which bears the vertical coil.

3. A method according to claim 1, characterized in that for each one of the parameters of horizontal amplitude (AH), vertical amplitude (AV), horizontal crossing (CH) or vertical crossing (CV), a field gradient is measured behind the deflection unit and two field gradients are measured in front of the deflection unit symmetrically on both sides of the central axis (41), and that each one of the parameters is measured by linearly combining the three gradients, the coefficients of the linear combination being indicative of the relative influences of the rear and front zones of the deflection unit, the parameters AH, AV, CH, CV being respectively defined by the following relations

$$AH=\tfrac{1}{2}\{DX(3)-DX(9)\} \qquad AV=\tfrac{1}{2}\{DY(12)-DY(6)\}$$
$$CH=\tfrac{1}{2}\{DY(9)-DY(3)\} \qquad CV=\tfrac{1}{2}\{DX(12)-DX(6)\}$$

in which DX(6), DX(12) and DY(9), DY(3) are respectively the distances between the vertical and horizontal ends of blue and red crosses passing through the center of the screen, and DX(3), DX(9), DY(12), DY(6) are respectively the distances at the cardinal points east, west, north and south between the sides of a blue rectangle and of a red rectangle formed along the borders of the measured cathode ray tube screen.

4. A method according to claim 3, characterized in that the displacement of the ferrite (24) along the axis x is controlled such that an error signal constituted by a linear combination of the horizontal amplitude parameter (AH) and of the vertical amplitude parameter (AV) is made to disappear.

5. A method according to claim 3, characterized in that the displacement of the ferrite (24) along the axis y is controlled such that an error signal constituted by a linear combination of the vertical crossing parameter (CV) and the horizontal crossing parameter (CH) is made to disappear.

6. An apparatus for implementing the method according to one of claims 1 to 5, characterized in that it comprises

— means (22, 23) for supporting and aligning the deflection unit (21),

— a measuring head (20) comprising probes for measuring the field gradients on the one hand in the zone in front of the deflection unit and on the other hand in the rear zone of the deflection unit,

— two channels for feeding line scanning signals (36, 37) and vertical scanning signals (34, 35) to said coils,

— a computer (31) for computing four parameters, namely the vertical amplitude parameter (AV) and the horizontal amplitude parameter (AH), the vertical crossing parameter (CV) and the horizontal crossing parameter (CH),

— a circuit (32) which elaborates from the four signals (42) simulating the four parameters a control signal for the displacement of the ferrite (24) on the separator (25) in x and/or y-direction in a plane perpendicular to the central axis (41) of the apparatus in order to make error signals disappear.

7. An apparatus according to claim 6, characterized in that the probes are constituted by pairs of measuring coils (100a, 100b).

8. An apparatus according to claim 6, characterized in that the measuring head (21) comprises two probes (72, 63) in the rear zone of the deflection unit close to an axis (41) of the apparatus, and eight probes (64, 65, 70, 71, 80, 81, 90, 91) in the front zone of the deflection unit arranged in two planes containing the x axis of line scanning or y axis of vertical scanning and being perpendicular to the axis z (41), the probes being conceived to detect pairwise orthogonal fields.

9. An apparatus according to claim 6, characterized in that the computer (31) comprises for each one of the four parameters to be simulated

— a circuit (103, 105) which calculates the field gradient of each probe (100)

— a band-pass filter (108) for each circuit (103, 105), this filter having a constant phase,

— an adder (144) which realises a linear combination of the gradients supplied by a probe of the rear zone (100) and two probes of the front zone (101, 102) specifically attributed to the computation of said parameter,

12

— a synchronous decoder (145) at the line or vertical frequency according to the simulated parameter,

— a filter (146) supplying a DC-component (113) which simulates said parameter.

10. An apparatus according to claim 6, characterized in that the circuit (32) comprises two channels, one (150) associated to the displacement in x direction and one (151) associated to the displacement in y direction, the channel (150) performing a linear combination of the signals simulating the vertical amplitude parameter (AV) and the horizontal amplitude parameter (AH), the channel (151) performing a linear combination of the signals simulating the vertical crossing parameter (CV) and the horizontal crossing parameter (CH).

11. An apparatus according to claim 10, characterized in that each channel (150, 151) performs an addition of its two inputs (152, 153) and applies factors defined by the ratio of resistances (163, 165 and 164, 165).

12. An apparatus according to claim 10, characterized in that motors (33, 29) control the displacements of the ferrite (24) through shoes (27, 40) in such a way that the control signals present at the outputs (156, 157) of the circuit (32) tend to disappear.

13. An apparatus according to claim 6, characterized in that the deflection unit (21) is supported by a horizotal support (23a).

14. An apparatus according to claim 6, characterized in that the means (22, 23) for supporting and aligning the deflection unit comprise self-centering clamps able to engage the rear ring of the deflection unit.

Fig.1

Fig.2

Fig.3

23  27  21  22

29  27  41  24

MOTEUR  28  25  38

26  39

AMPLI 34  OSC. TRAME 35

AMPLI 36  OSC. LIGNE 37

TÊTE DE MESURE  20

30

CALCULATEUR  31

42

ASSERVISSEMENT  32

y  40

MOTEUR  33

Fig.12

202

201

203  204

200

205  206  207

Fig.5

Fig.4

AMPLITUDE
HORIZONTALE

Fig.6

CROISEMENT
HORIZONTAL

Fig.7

Fig.11

4

EP 0 175 619 B1

Fig.8

AMPLITUDE
VERTICALE

Fig.9

CROISEMENT
VERTICAL

5

# Fig.10